(19) **Europäisches Patentamt / European Patent Office / Office européen des brevets**

(11) **EP 1 430 342 B1**

(12) **EUROPEAN PATENT SPECIFICATION**

(45) Date of publication and mention
of the grant of the patent:
**18.04.2007 Bulletin 2007/16**

(21) Application number: **02716237.9**

(22) Date of filing: **30.01.2002**

(51) Int Cl.:
**G02B 6/34** $^{(2006.01)}$

(86) International application number:
**PCT/IB2002/000301**

(87) International publication number:
**WO 2002/103423 (27.12.2002 Gazette 2002/52)**

(54) **PASSBAND FLATTENING IN AN ARRAYED WAVEGUIDE GRATING**

ENTZERRUNG DES DURCHLASSBANDES IN EINEM WELLENLEITERGITTER

APLATISSEMENT DE BANDE PASSANTE DANS UN RESEAU SELECTIF PLANAIRE (AWG)

(84) Designated Contracting States:
**AT BE CH CY DE DK ES FI FR GB GR IE IT LI LU MC NL PT SE TR**

(30) Priority: **15.06.2001 GB 0114608**

(43) Date of publication of application:
**23.06.2004 Bulletin 2004/26**

(73) Proprietor: **Gemfire Europe Limited Livingston EH54 8SF (GB)**

(72) Inventor: **VAN WEERDEN, Harm Enschede (NL)**

(74) Representative: **Mills, Julia D Young & Co 120 Holborn London EC1N 2DY (GB)**

(56) References cited:
**EP-A- 0 444 817**     **EP-A- 0 881 512**
**WO-A- 02/101435**     **US-A- 5 629 992**
**US-A- 6 069 990**

**Description**

FIELD OF THE INVENTION

The present invention relates to arrayed waveguide gratings (AWGs), and in particular to passband flattening in AWGs. More specifically, the invention concerns improved passband flattening features for AWGs.

BACKGROUND ART

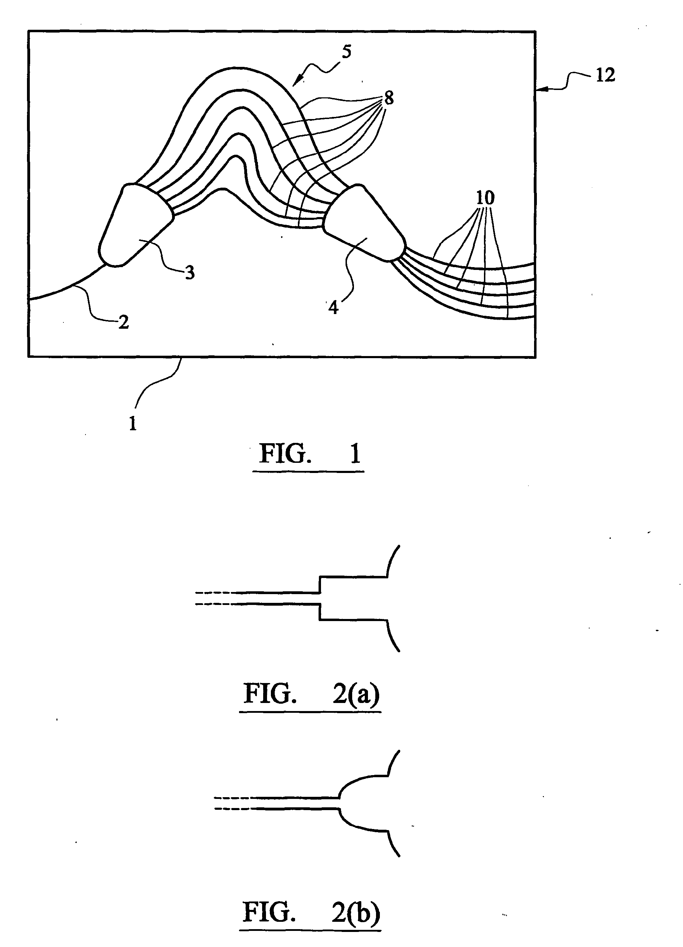

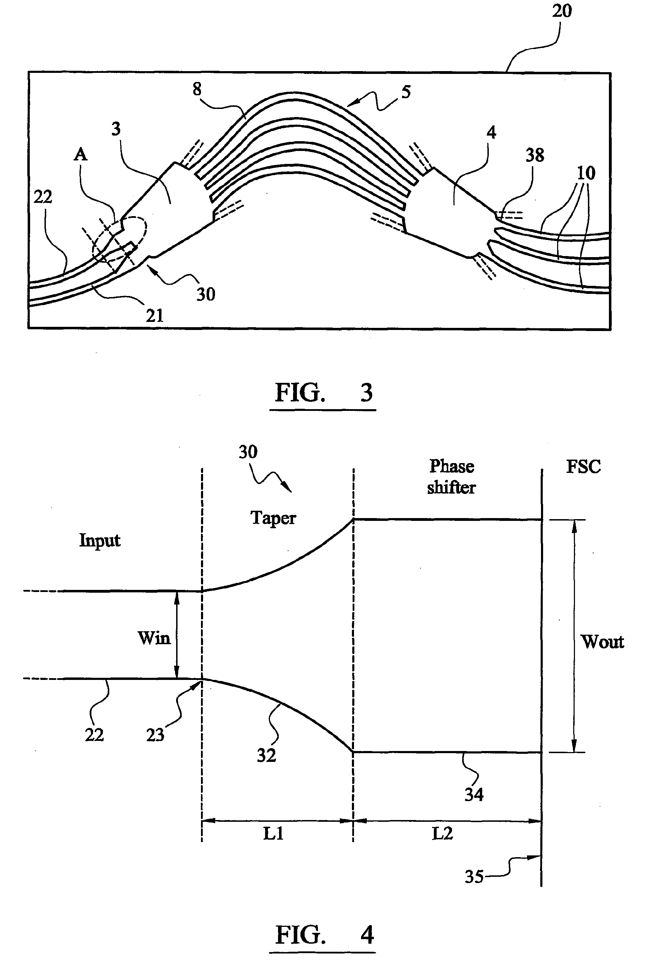

AWGs are now well-known components in the optical communications network industry. An AWG is a planar structure comprising a number of array waveguides which together act like a diffraction grating in a spectrometer. AWGs can be used as multiplexers and as demultiplexers, and a single AWG design can commonly be used both as a multiplexer and demultiplexer. The construction and operation of such AWGs is well known in the art. See for example, "PHASAR-based WDM-Devices: Principles, Design and Applications", M K Smit, IEEE Journal of Selected Topics in Quantum Electronics Vol.2, No.2, June 1996, US 5,002, 350 and WO97/23969.
A typical AWG mux/demux 1 is illustrated in Fig.1 and comprises a substrate or "die" 1 having provided thereon at least one substantially single mode input waveguide 2 for a multiplexed input signal, two slab couplers 3,4 (also sometimes referred to as "star couplers") connected to either end of an arrayed waveguide grating 5 consisting of an array of transmission waveguides 8, only some of which are shown, and a plurality of substantially single mode output waveguides 10 (only some shown) for outputting respective wavelength channel outputs from the second (output) slab coupler 4 to the edge 12 of the die 1. In generally known manner, there is a constant predetermined optical path length difference between the lengths of adjacent waveguides 8 in the array (typically the physical length of the waveguides increases incrementally by the same amount from one waveguide to the next) which determines the position of the different wavelength output channels on the output face of the second slab coupler 4. Typically, the physical length of the waveguides increases incrementally by the same amount, $\Delta L$, from one waveguide to the next, where

$$\Delta L = m\lambda_c/n_c$$

where $\lambda_c$ is the central wavelength of the grating, $n_c$ is the effective refractive index of the array waveguides, and m is an integer number. In known manner, the waveguides and slab couplers are typically formed as "cores" on a silicon substrate (an oxide layer is commonly provided on the substrate prior to depositing the waveguide materials) and are covered in a cladding material, this being done for example Flame Hydrolysis Deposition (FHD) or Chemical Vapour Deposition (CVD) fabrication processes.
In the described AWGs, the passband (i.e. shape of the transmission spectrum $T(\lambda)$, which is a plot of dB Loss against Wavelength) for each output channel generally corresponds to the coupling of a Gaussian beam into a Gaussian waveguide, and is therefore itself Gaussian-shaped. In many situations it would be more desirable for the AWG to have a flat passband. This is generally because a Gaussian passband requires accurate control over emitted wavelengths, thus making it difficult to use in a system. Various ways of achieving a flat passband have been proposed, one way being to use "near field shaping". This involves creating a double-peaked mode field from the (single peak) input mode field. When this double-peaked field is convoluted with the single mode output waveguide, the resulting passband takes the form of a single, generally flat peak.
One way of creating the necessary double-peaked field is to use an MMI (Multi-Mode Interferometer) on the end of the input waveguide, adjacent the first slab coupler, as shown in Fig.2(a). The MMI creates higher order modes from the single mode input signal and these multiple modes give rise to a double-peaked field at the output of the MMI. US5,629,992(Amersfoort) describes this passband flattening technique in detail.
An alternative technique is to use a parabolic-shaped taper or "horn" on the end of the input waveguide, as shown in Fig.2(b). This is described in JP 9297228A. The parabolic taper gives rise to continuous mode expansion (by excitation of higher order modes) of the input signal along the length of the taper, until both the fundamental and second order modes are present, thus forming a double-peaked field at the output end of the taper.
However, both the above-described techniques suffer from the disadvantage that the passband-flattening feature (namely the MMI or parabolic horn) create significant insertion loss in the device. This is largely due to losses through radiation modes which are generated by discontinuities at the end of the single mode input waveguide, for example at the input edge of the MMI or parabolic horn. Also, the parabolic horn has its steepest taper angle in the narrowest part of the taper (the beginning), which can encourage radiation losses. Radiation losses also tend to increase crosstalk between the different wavelength channels of the AWG, which is highly undesirable.

EP-A-0444817 relates to an optical multiplexer/demultiplexer. It includes a plurality of optical waveguides each of which differ in length from its neighbouring waveguide by a predetermined amount.

EP-A-0881512 discusses a signal router for optical signals. The router has input and output waveguide arms which can be configured such that a signal applied to the waveguide arm excites multiple modes in that waveguide arm.

It is an aim of the present invention to avoid or minimize one or more of the foregoing disadvantages.

SUMMARY OF THE INVENTION

According to a first aspect of the invention, there is provided.

An arrayed waveguide grating (AWG) device composing:

at least one substantially single-mode input waveguide optically coupled to a first free space coupler,
a plurality of array waveguides optically coupled between the first free space coupler and a second free space coupler, the plurality of array waveguides having predetermined optical path length differences therebetween;
a plurality of substantially single-mode output waveguides optically coupled to the second slab coupler,
passband flattening means disposed between at least one of the substantially single mode input and output waveguides and an adjacent one of the first and second free space couplers, the passband flattening means comprising a non-adiabatic tapered waveguide which widens in width towards the respective free space coupler,
at least an initial portion of the non adiabatic tapered waveguide, which initial portion is connected to said one of the substantially single mode input and output waveguides having a taper angle which increases towards said respective free space coupler, and the non-adiabatic tapered waveguide-merges substantially continuously with-said one of the substantially single mode input and output waveguides;
wherein the tapered waveguide has curvilinear shape defined by the following equations:

$$w(t) = w_{in} + \frac{w_{out} - w_{in}}{2}\left[1 - \cos(t\,\pi)\right]$$

$$z(t) = L\left[t + \frac{P}{2\pi}\sin(2\pi t)\right]$$

$$t = [0..1]$$

where L is the length of the tapered waveguide;
w(t) is the width along the propagation direction;
z(t) is the length along the propagation direction;
$w_{in}$ and $w_{out}$ are the widths of input and output ends respectively of the tapered waveguide;
and p is a shape factor, that has a value between 0 and 1.

wherein at least an initial portion of the non-adiabatic tapered waveguide, which initial portion is connected to said one of the substantially single mode input and output waveguides, has a taper angle which increases towards said respective free space coupler, and the non-adiabatic tapered waveguide merges substantially continuously with said one of the substantially single mode input and output waveguides.

By designing the passband flattening means to merge smoothly into the end of the single mode input or output waveguide, significant discontinuities in shape between the input/output waveguide and the passband flattening feature are avoided and thus radiation losses are kept to a minimum. This is in direct contrast to the use of an MMI for passband flattening, as proposed in US 5,629,992, which relies on the discontinuity between the shape of the end of the MMI and the end of the single mode input waveguide connected thereto, to generate the second order mode. Also, by having a taper angle which increases towards the coupler, radiation losses are kept low.

For the avoidance of doubt, all references to "modes" appearing hereinafter refer to guided modes (rather than radiation modes), unless otherwise described.

Preferably, the non-adiabatic tapered waveguide is tapered gradually so as to gradually excite the second order mode.

In the first aspect of the invention, the shape of opposing tapered sides of the non-adiabatic tapered waveguide are each based on a cosine curve. The cosine curve may have a predetermined perturbation introduced therein to increase power conversion from the fundamental to the second order mode in the passband flattening means. For example, in a described embodiment the shape of the waveguide is a function of a perturbation factor, p, which controls the shape of a portion of the tapered waveguide. The perturbation factor p may be chosen so as to achieve a desired degree of power conversion between the fundamental and the second order mode in the tapered waveguide, for example in the range of 5-20% conversion. The length of the tapered waveguide, between the respective free space coupler and the first end of the respective input or output waveguide is preferably chosen to ensure that the phase difference between the fundamental and second order modes, at the respective free space coupler, is approximately equal to, most preferably substantially equal to, $N \times \pi$, where N is an integer number.

Where the AWG device has more than one input waveguide, a substantially identical passband flattening means is preferably provided for each input waveguide. Where the passband flattening means is disposed between an output waveguide and the second coupler, a said passband flattening means is preferably provided for each output waveguide.

Preferred embodiments of the invention will now be described by way of example only and with reference to the accompanying drawings in which:

BRIEF DESCRIPTION OF THE DRAWINGS

Fig. 1 is a schematic plan view of a conventional AWG;

Figs. 2 (a) and (b) illustrate in plan view two prior art passband flattening features which can be used in the AWG of Fig.1;

Fig. 3 is a schematic plan view of an AWG according to a first example, useful for understanding the invention;

Fig. 4 is a magnified view of the ringed portion A of Fig. 3(a), illustrating in detail a new passband flattening feature in the AWG device of Fig. 3(a);

Figs 5(a) illustrates a modified version of the phase shifter section of the example of Fig. 3(b);

Fig.5 (b) illustrates a possible example, useful for understanding the invention incorporating the alternative phase shifter section of Fig. 5 (a) in an AWG having multiple input waveguides, and also illustrating tapered output waveguides of the AWG;

Figs 6 (a) illustrates another possible modified version of the phase shifter section of the example of Fig. 3;

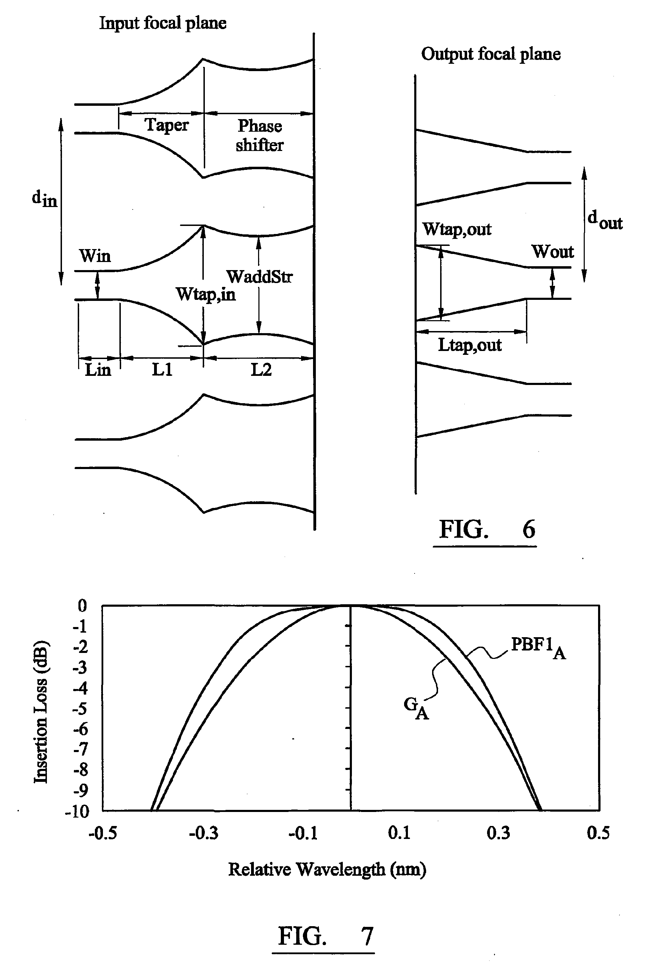

Fig. 6 illustrates another possible example, useful for understanding the invention incorporating another possible modified version of the phase shifter section of Fig. 3 (b), in an AWG having multiple input waveguides, and also illustrating adiabatically tapered output waveguides of the AWG;

Fig. 7 is a graph illustrating the passband $PBF1_A$ of an output channel of a fabricated prototype AWG incorporating the passband flattening feature shown in Fig. 6, on every input waveguide, and adiabatically tapered output waveguides as shown in Fig. 6, and also the passband $G_A$ for the same output channel in an AWG which has only adiabatic tapers on the input and output waveguides;

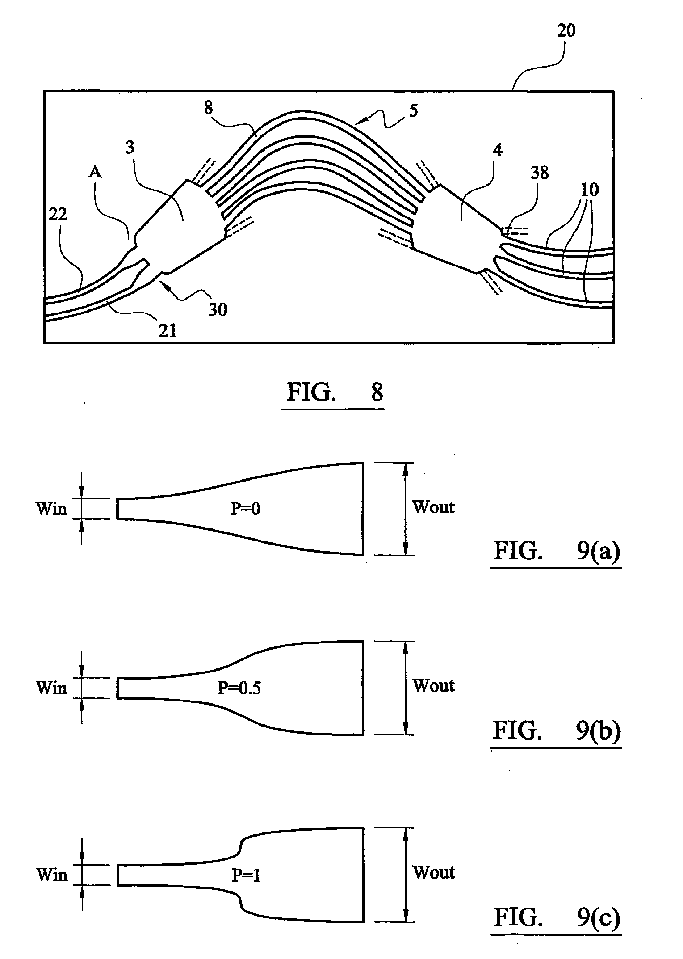

Fig.8 is a schematic plan view of an AWG according to an embodiment of the invention;

Fig. 9 (a) to (c) illustrate the modified shape of the perturbed cosine shaped passband flattening feature of the AWG of Fig. 6, obtained when three different shape factors, p, are used to perturb the cosine shape;

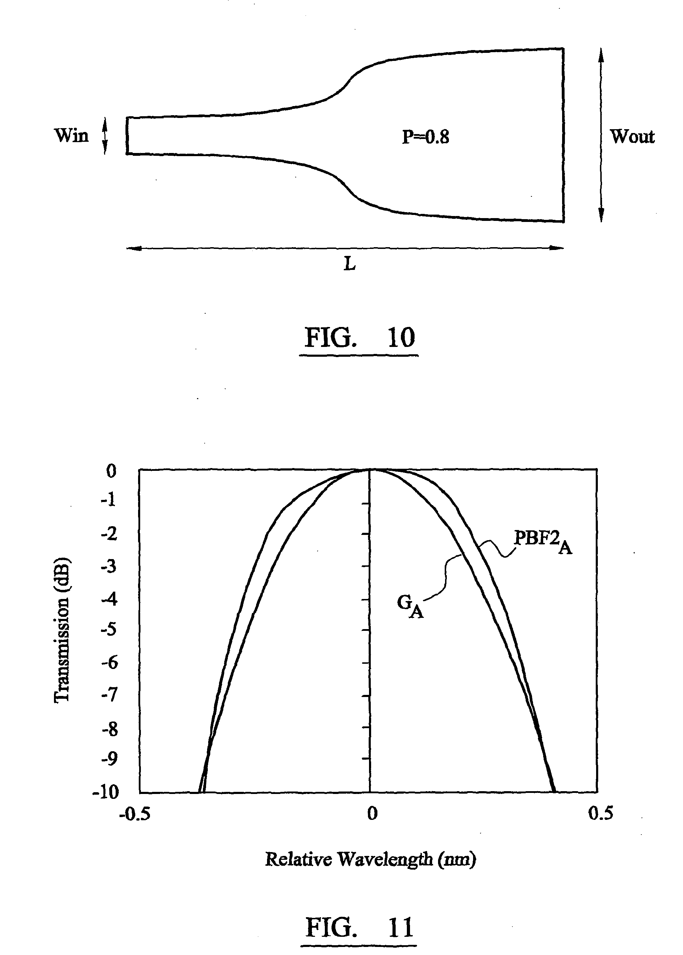

Fig. 10 illustrates the most preferred shape of the perturbed cosine waveguide which is achieved using a shape factor p=0.8;

Fig. 11 is a graph illustrating the output channel passband of a fabricated prototype AWG incorporating the passband flattening feature shown in Fig.10 (b), on every input waveguide, and adiabatically tapered output waveguides, and also the passband for the same output channel in an AWG which has only adiabatic tapers on the input and output waveguides;

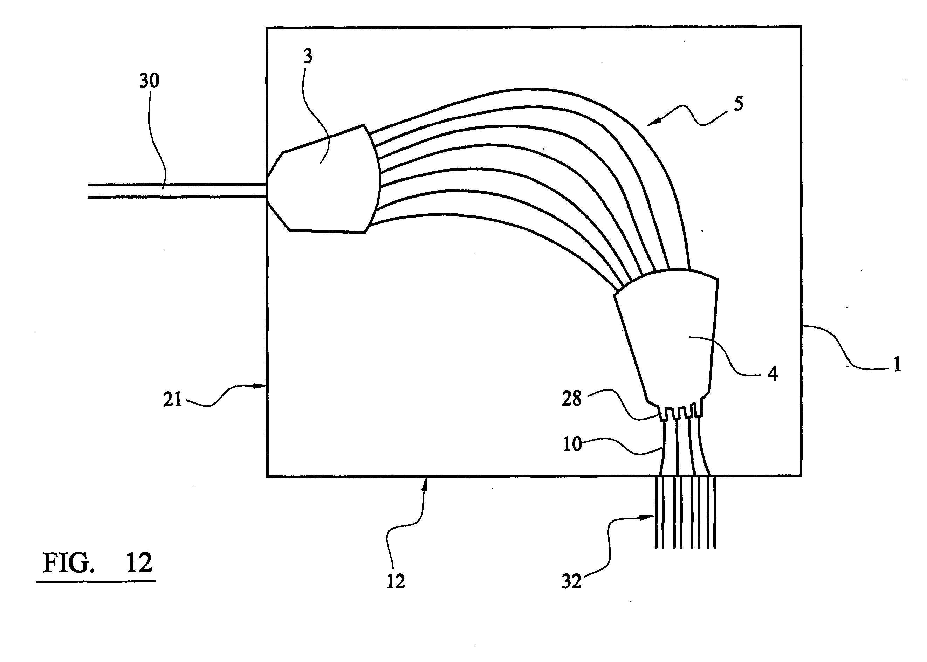

Fig. 12 is a schematic plan view of an AWG according to another embodiment.

DETAILED DESCRIPTION OF THE PREFERRED EMBODIMENTS

To flatten the passband of an AWG of the type illustrated in Fig.1, a non-adiabatic taper can be used on the end of each input waveguide, between the input waveguide 2 and the first slab coupler 3. Fig. 3 (a) shows in plan view an AWG device 20 according to a first example, useful for understanding the invention. Like components to those in Fig. are referenced by like numerals. For clarity, only some of the array waveguides 8 and output waveguides 10 are shown. Two input waveguides 21,22 are shown, but in practice there could be more if desired. A passband flattening feature 30 is disposed on an output end 23 of each single mode input waveguide 21,22, optically coupling the input waveguide 22 to the first slab waveguide. The design of the passband flattening feature 30 used on each input waveguide is shown in detail in Fig.3(b). The feature consists of an exponential taper section 32 immediately followed by a straight waveguide section 34 which is of the same width $W_{out}$ as the end of the exponential taper section 32. The taper is defined by the following equations:

$$z(t) = Lt$$

$$w(t) = w_{in} \exp\left[ \ln(\frac{w_{out}}{w_{in}})t \right]$$

$$t = 0..1$$

where L is the length of the taper section, w(t) is the width along the propagation direction, z(t) is the length along the propagation direction, and $W_{in}$ and $W_{out}$ are the widths of the input and output ends respectively of the taper section. The exponential section 32 gradually excites the second order mode. The length L1 of the taper section 32 is chosen to be long enough to achieve a desired degree of power conversion from the fundamental mode (of the single-mode input waveguide 22) to the second order mode in the range of 5-20%, typically 5-10% conversion.

The purpose of the phase shifter will become clear from the following discussion relating to chromatic dispersion. This topic is also fully discussed in our pending UK patent application filed on 11th June 2001 in the names of Kymata Limited and BBV Software BV (application number not yet known), and entitled "Arrayed Waveguide Grating with Reduced Chromatic Dispersion", the entire contents of which is hereby incorporated herein by reference.

The Differential Group Delay $\Delta\tau_c$ of a filter device is related with its Chromatic Dispersion $D_c$ and its split $\delta\lambda$:

$$\Delta\tau_c = \delta\lambda \cdot D_c$$

where the split $\delta\lambda$ = difference in passband center wavelength between the TE and TM polarizations.

The Group Delay $\tau_{group}$ and Chromatic Dispersion of an AWG device is calculated from the phase $\Phi$ of its response:

$$\tau_{group} = -\frac{1}{2\pi} \cdot \frac{d\Phi}{df}.$$

The chromatic dispersion, $D_c = \frac{d\tau_{group}}{d\lambda}$, follows as:

$$D_c = -\frac{f^2}{2\pi c} \cdot \frac{d^2\Phi}{df^2}.$$

In order to minimize chromatic dispersion we use the phase shifter section 34 to design the phase difference $\Delta\varphi$ between the fundamental and second order modes at the end of the phase shifter section 34, where they enter the input face 35 of the first slab coupler 3, to be:

$$\Delta\varphi = N\pi$$

Where N is an integer. In the embodiment of Figs. 3(a) and (b) we have designed the length of the phase shifter 34 so that the phase difference Δφ=2π, whereby the two modes are effectively in phase. This is done by first optimizing the length L1 of the exponential taper section 32 to give the desired degree of mode conversion, typically in the range of 5-20%, for example about 7%. Next, the phase between the 0th and 2nd order modes at the end of the exponential taper is calculated using, for example, BPM simulation. Finally, the length L2 of the phase shifter 34 is which is necessary to achieve the desired phase difference Δφ=2π at the output end of the phase shifter is calculated. Again, this can be done from BPM simulations of the structure, or alternatively the theory of MMIs proposed by Soldano in *Optical Multi-Mode Interference Devices Based on Self-Imaging: Principles and Applications,* by L. Soldano and E.Pennings, Journal of Lightwave Technology, pp615-627, 1995, may be employed to facilitate this calculation. This is described further in the pending UK patent application filed on 11th June 2001 in the names of Kymata Limited and BBV Software BV (application number not yet known), and entitled "Arrayed Waveguide Grating with Reduced Chromatic Dispersion", the content of which is already incorporated herein by reference, as mentioned above.

It will be appreciated that the exact phase difference Δφ at the end of the passband flattening structure may in practice vary from the desired value of 2π due to, for example fabrication defects or other variations in the actual device structure from the design structure on which the simulations were based. However, as long as the actual phase difference is approximately Nπ, where N is an integer number, the CD should still be relatively low, the invention thus providing some benefit.

As is generally understood in the art, the convolution of the double-peak field entering the input face 35 of the first slab coupler 3 from the output end of the passband flattening feature 30 with the fundamental mode of any of the single mode output waveguides 10 will produce a generally flat passband (i.e. spectral response) of the respective wavelength channel of the AWG output. Our simulations show the passband flattening feature 30 does produce the desired generally flat passband, but we have noted that there is a slight "ripple" present in the flattened peak of the response. This ripple effect can be substantially removed by introducing an taper 38 on the end of each output waveguide 10 where it is coupled to the second slab coupler 4 (see Fig.3(a)), so that the output waveguides 10 each widen towards the second slab coupler 4. (These tapers and the passband flattening features 30 are much magnified in scale in Fig. 3(a) as compared to the rest of the features of the AWG, for illustrative purposes). This taper 38 is a linear adiabatic taper, with the taper widening towards the second slab coupler 4. We define an adiabatic taper as one in which the total power conversion to higher order guided modes (above the fundamental mode) and radiation modes is below -35dB.

It is worth noting that where there is more than one input waveguide, it is advantageous for every input waveguide to be provided with an identical passband flattening (PBF) feature 30, whereby each PBF feature is flanked on one or both sides by at least one identical PBF feature. We believe this will further reduce radiation effects (the neighbours modify the radiation mode spectrum). Thus is can also be advantageous to put an extra PBF on each side of the input waveguide array, with no input waveguide attached, just to so every PBF feature is flanked on both sides by an identical PBF feature.

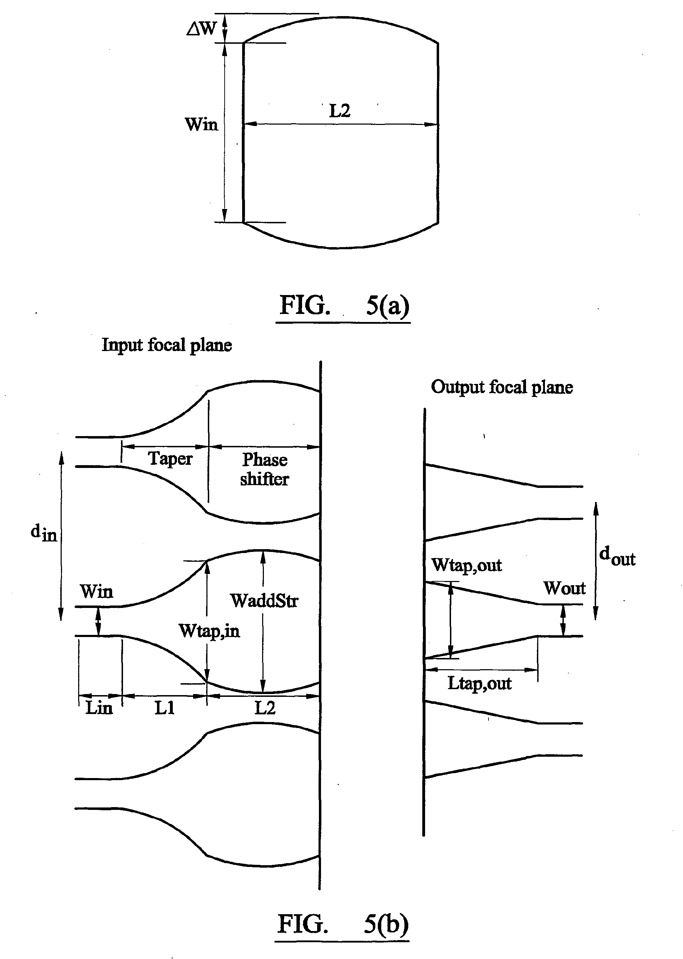

Modified versions of the phase shifter 34 are also possible. For example instead of being a parallel-sided waveguide, the edges of the phase shifter (in plan view) may be curved. Fig.5(a) illustrates a passband flattening structure in which the opposing sides of the phase shifter 40 are defined by a cosine shape. The cosine-shaped phase shifter 40 is defined by the following equations:

$$z(t) = Lt$$

$$w(t) = (w_{in} + \Delta w)\cos\left[(2t-1)a\cos(\frac{w_{in}}{w_{in} + \Delta w})\right]$$

$$t = 0..1$$

in case Δw>0 and

$$z(t) = Lt$$

$$w(t) = 2w_{in} - (w_{in} - \Delta w)\cos\left[(2t-1)a\cos(\frac{w_{in}}{w_{in} - \Delta w})\right]$$

$$t = 0..1$$

in case $\Delta w < 0$, and where *a*cos is an abbreviation of arccos.

Fig.5(b) illustrates three input waveguides of an AWG with such a structure, at the input focal plane 35 of the first slab coupler 3, and also showing the output focal plane 39 of the second slab coupler 4, and three output waveguides 10 each with the adiabatic linear taper structure 38 for reducing ripple. The cosine shape may be advantageous over the parallel-sided phase shifter of Fg.3(b) as it provides a more continuous join between the exponential taper section and the phase shifter, therefore reducing radiation losses at this join. However, the structure of Fig.6(a) may in practice give rise to increased crosstalk between adjacent wavelength channels.

Fig.6 illustrates a modified version of the Fig.5(b) example, in which the phase shifter 40' this time has an inverted cosine shape (defined by the same equations, but inversely shaped). This structure avoids any adjacent crosstalk as compared with the phase shifter structure of Fig.6(a). Fg.7 is a plot of output channel passband (graph $PBF1_A$) of the AWG illustrated by Fig.6, plotted from practical results obtained from a fabricated prototype device of this design, and also showing the generally Gaussian passband (graph $G_A$), obtained for a similar AWG which does not incorporate this passband flattening feature, but was fabricated only with adiabatic linear tapers on the ends of the input and output waveguides coupled to the slab couplers 3,4.

Fig.8 shows an embodiment of the invention. Again, like parts are referenced by like reference numerals. In this embodiment the passband flattening feature is in the form of a tapered waveguide 40 having a curvilinear shape in the form of a perturbed cosine function defined by the following equations:

$$w(t) = w_{in} + \frac{w_{out} - w_{in}}{2}[1 - \cos(t\pi)]$$

$$z(t) = L\left[t + \frac{p}{2\pi}\sin(2t\pi)\right]$$

$$t = [0..1]$$

where L is the length of the taper section:

w(t) is the width along the propagation direction;

z(t) is the length along the propagation direction;

$w_{in}$ and $w_{out}$ are the widths of the input and output ends respectively of the taper section; and

p is a shape factor, which has a value between 0 and 1 for passband flattening,

and which basically controls the slope in the middle (z=0.5L) of the taper (values of p greater than 1 are also possible, though less preferred).

For a given $w_{in}$ and $w_{out}$ the free parameters in the taper shape are therefore L and p. For different p. values, the taper shape changes. This is illustrated in Figs.9(a) to (c) which show the taper shape for p=0, p=0.5 and p=1 respectively.

In the present embodiment the length L of the taper has in practice a predetermined fixed value necessary to achieve a desired phase relation between the fundamental and second order modes at the taper output 42, as described below, and so in practice the only remaining variable is p. In our preferred design, we choose a shape value of p=0.8, which gives the taper shape shown In- Fig. 10. Our BPM simulations show that this taper shape should achieve in the range of 5-20% power conversion, typically about 7%, from the fundamental to the second order mode.

As explained above with reference to the Fig.3(a),(b) design, in order to minimize chromatic dispersion and DGD it is desirable to design the overall length L of the passband flattening structure to try and ensure that the phase difference $\Delta\varphi$ between the fundamental and second order modes at the end of the passband flattening feature, where they enter the input face 35 of the first slab coupler 3, is:

$\Delta\varphi = N\pi$, where N is an integer.

The required length L to achieve (or at least substantially achieve) this phase condition is calculated using BPM simulations of the passband flattening structure. In our preferred design, the value of $w_{out}$ is 16μm, $w_{in}$ is 6μm, and the length of the taper is L=347μm. Again, in practice as long as the actual phase difference is approximately Nπ, where N is an integer, the benefit of the invention will be achieved to at least some extent.

As in the Fig.4 embodiment, our simulations show that while the passband flattening feature 40 of Fig.10 produces the desired generally flat passband response, there is a slight "ripple" in the peak of the flattened response. Again, this ripple effect is substantially removed by introducing an adiabatic linear taper 38 on the end of each output waveguide 10 where it is coupled to the output face of the second slab coupler 4, as illustrated in Fig. 5(b) and Fig.6, the taper widening towards the second slab coupler 4.

A significant feature of the perturbed cosine tapered waveguide shape is that at the beginning of the taper, where the taper merges into the output end of the single mode input waveguide, the taper angle is kept low by virtue of the generally cosine curve shape of the taper at the beginning. This keeps radiation losses to a minimum. (For the avoidance of doubt, the taper angle is defined as the angle of the tapered sides of the waveguide relative to the propagation direction in the waveguide. In the illustrated embodiments, where the waveguides have a generally symmetrical structure, the propagation direction is along the axis of the

waveguides.) The taper angle gradually increases towards the slab coupler until after the perturbation introduced by the factor p.

Fig. 11 is a plot of the measured passband ($PBF2_A$) of a prototype fabricated AWG device with the passband flattening feature 40 of Fig.10 on the input waveguides, and having the output waveguide tapers 38, and also showing the generally Gaussian passband (graph $G_A$) obtained for a similar AWG which does not incorporate this passband flattening feature, but was fabricated only with adiabatic tapers on the ends of the input and output waveguides coupled to the slab couplers 3,4.

It will be appreciated that in the examples and embodiments of Figs. 3 (b), 5 (b), 6,8,9 and 10 the passband flattening feature merges continuously with the end 23 of the single mode input waveguide 22, by virtue of the smoothly tapering shape of the beginning of the exponentially tapered or perturbed cosine tapered waveguide shape. Thus discontinuities between the input waveguide and the passband flattening feature which would cause radiation losses (and thus lead to increased insertion loss in the AWG) are substantially avoided.

For the avoidance of doubt, it is not essential that the input waveguide be a single mode waveguide having the same width along its entire length, right up to where it is connected to the passband flattening feature. For example the input waveguide may be a single mode waveguide which is be adiabatically tapered (for example has a linear adiabatic taper) at its end 23 which is connected to the passband flattening feature, so as to widen towards the passband flattening feature. Such an input waveguide is still considered to be a substantially single mode waveguide. In such embodiments this adiabatically tapered end of the input waveguide is still arranged to merge substantially continuously into the non-adiabatic tapered waveguide forming the passband flattening feature.

In all of the above-described embodiments, where reference is made to input waveguides and output waveguides, it will be appreciated that these terms are used in relation to when the AWG is used as a demultiplexer. However, it will be understood that the same AWG could equally well be used as a multiplexer, in which case the terms input and output should be interchanged, as optical signals are then travelling through the AWG _in the opposite direction. For the avoidance of doubt it will thus be understood that the wording "input" and "output" is not intended to be limiting, the attached claims being intended to cover an AWG which is used as a demultiplexer or as a multiplexer.

It will be appreciated that other modifications and variations are possible without departing from the scope of the invention. For example, it is expressly intended that all combinations of those elements and/or method steps which perform substantially the same function in substantially the same way to achieve the same results are within the scope of the invention. For example, a passband flattening feature according to Figs. 4 or 10 could instead be disposed between each output waveguide 10 and the second slab coupler 4, instead of between the input waveguide and the input slab coupler 3, to achieve the desired passband flattening. The widest end of the passband flattening feature would be connected to the output face of the output slab coupler 4, and the thinnest end would merge smoothly into the substantially single mode output waveguide 10. Adiabatic tapers may then be provided on the ends of the input waveguides which are coupled to the first slab coupler, if desired, so that the input waveguides widen towards the first slab coupler. In alternative embodiments there may be no input waveguides. Instead, the first slab coupler may be arranged at the edge of the die 1 whereby an input optical fibre 30 may be coupled directly to the input face 21 of the slab coupler, as shown in Fig. 12. The convolution of the double-peak field produced by the passband flattening features 28 at the output side of the device, with the fundamental mode of the output optical fibres 32 which would be coupled to the output edge 12 of the die 1 to receive the output channel signals from the output waveguides 10, produces the required flattened passband.

Also, in another possibility an identical passband flattening feature 30,40 may be provided between both the input slab coupler and each input waveguide and between the output slab coupler and each output waveguide 10. (These need not necessarily be of identical size on both the input and output sides. In fact, making them a different size will allow a greater degree of design freedom.)

Where the non-adiabatic tapers for passband flattening are provided on the output side of the array, the width of each non-adiabatic tapered waveguide, where it is coupled to the second slab coupler, need not be identical from one output waveguide to the next. For example, the widths may in fact increase generally linearly, from the lowest frequency channel to the highest frequency channel 40, in order to improve uniformity in the adjacent crosstalk, passband shape, or another performance parameter of the AWG, as described in detail in our pending UK patent application No. 0106014.4 (in which we "chirp" the widths of the output waveguides at the output slab coupler).

## Claims

1. An arrayed waveguide grating (AWG) device comprising:

   at least one substantially single-mode input waveguide (21, 22) optically coupled to a first free space coupler;
   a plurality of array waveguides (8) optically coupled between the first free space coupler (3) and a second free space coupler (4), the plurality of array waveguides (8) having predetermined optical path length differences therebetween;
   a plurality of substantially single-mode output waveguides (10) optically coupled to the second slab coupler;
   passband flattening means (30) disposed between at least one of the substantially single mode input and output waveguides and an adjacent one of the first and second free space couplers, the passband flattening means (30) comprising a non-adiabatic tapered waveguide which widens in width towards the respective free space coupler; at least an initial portion of the non-adiabatic tapered waveguide, which initial portion is connected to said one of the substantially single mode input and output waveguides having a taper angle which increases towards said respective free space coupler, and the non-adiabatic tapered waveguide merges substantially continuously with said one of the substantially single mode input and output waveguides;
   wherein the tapered waveguide has a curvilinear shape defined by the following equations:

   $$w(t) = w_{in} + \frac{w_{out} - w_{in}}{2}\left[1 - \cos(\pi t)\right]$$

   $$z(t) = L\left[t + \frac{P}{2\pi}\sin(2\pi t)\right]$$

   $$t = [0..1]$$

   where L is the length of the tapered waveguide;
   w(t) is the width along the propagation direction;
   z(t) is the length along the propagation direction;
   $w_{in}$ and $w_{out}$ are the widths of input and output ends respectively of the tapered waveguide;
   and p is a shape factor, that has a value between 0 and 1.

2. An AWG device according to claim 1, wherein the non-adiabatic tapered waveguide is tapered gradually so as to gradually excite the second order mode.

3. An AWG according to claim 1, wherein p has a value in the range of $o \leq p \leq 1$.

4. An AWG device according to any preceding claim, wherein the length (L) of the tapered waveguide, between the respective said free space coupler and a first end of said at least one of the input and output waveguides which is connected to the tapered waveguide, is chosen so that the phase difference $\Delta\varphi$ between the fundamental and second order modes, at the respective free space coupler, is approximately equal to N x π, where N is an integer:

**5.** An AWG device according to any preceding claim, wherein said passband flattening means (30) is disposed between the first free space coupler and said at least one input waveguide.

**6.** An AWG according to claim 5, wherein a plurality of input waveguides are provided and a substantially identical said passband flattening means (30) is provided for each input waveguide.

**7.** An AWG device according to claim 6, wherein an adiabatic taper is provided at the end of each output waveguide optically coupled to the second free space coupler, such that the output waveguide widens towards the second free space coupler.

**8.** An AWG device according to claim 5, wherein the passband flattening means (30) is also disposed between the second free space coupler (4) and at least one output waveguide (10).

**9.** An AWG device according to any of claims 1 to 4, wherein a substantially identical said passband flattening means (30) is disposed between the second free space coupler (30) and each said output waveguide (10).

**10.** An AWG device according to claim 9, wherein an adiabatic taper is provided at the end of each input waveguide optically coupled to the first free space coupler (3), such that the input waveguide widens towards the first free space coupler (3).

**Patentansprüche**

**1.** In einem Array angeordnete Wellenleitergitter-(AWG-)Vorrichtung mit:

mindestens einem im wesentlichen einmodigen Eingangswellenleiter (21, 22), der optisch mit einem ersten Freiraumkoppler verbunden ist,
einer Mehrzahl von Array-Wellenleitern (8), die optisch zwischen dem ersten Freiraumkoppler (3) und einem zweiten Freiraumkoppler (4) verbunden sind, wobei die Mehrzahl von Array-Wellenleitern (8) zwischen einander vorbestimmte optische Weglängenunterschiede aufweisen,
einer Mehrzahl von im wesentlichen einmodigen Ausgangswellenleitern (10), die optisch mit dem zweiten Plattenkoppler verbunden sind,
Mitteln (30) zum Abflachen des Durchlaßbandes, die zwischen mindestens einem der im wesentlichen einmodigen Eingangs- und Ausgangswellenleitern und einem benachbarten der ersten und zweiten Freiraumkoppler angeordnet ist, wobei das Mittel (30) zum Abflachen des Durchlaßbandes einen nicht-adiabatisch verjüngten Wellenleiter aufweist, der sich in der Breite zu dem entsprechenden Freiraumkoppler hin aufweitet,
mindestens einem Anfangsteil des nicht-adiabatisch verjüngten Wellenleiters, wobei dieser Anfangsteil mit dem einen im wesentlichen einmodigen Eingangs- und Ausgangswellenleiter verbunden ist, wobei er einen Kegelwinkel aufweist, der sich zu dem entsprechenden Freiraumkoppler hin vergrößert und wobei der nicht-adiabatisch verjüngte Wellenleiter im wesentlichen kontinuierlich in den einen der im wesentlichen einmodigen Eingangs- und Ausgangswellenleiter übergeht,
wobei der verjüngte Wellenleiter eine gekrümmte Form aufweist, die durch die folgenden Gleichungen definiert ist:

$$w(t) = w_{in} + \frac{w_{out} - w_{in}}{2}\left[1 - \cos(\pi t)\right]$$

$$z(t) = L\left[t + \frac{p}{2\pi}\sin(2\pi t)\right]$$

$$t = \left[0..1\right],$$

wobei $L$ die Länge des verjüngten Wellenleiters ist,
$w(t)$die Breite längs der Ausbreitungsrichtung ist,
$z(t)$ die Länge längs der Ausbreitungsrichtung ist,
$w_{in}$ und $w_{out}$ die Breiten der Eingangs- bzw. Ausgangsenden des verjüngten Wellenleiters sind,
und p ein Formfaktor ist, der einen Wert zwischen 0 und 1 aufweist.

2. AWG-Vorrichtung nach Anspruch 1, **dadurch gekennzeichnet, daß** der nicht-adiabatisch verjüngte Wellenleiter stufenweise verjüngt ist, so daß stufenweise die Mode zweiter Ordnung angeregt wird.

3. AWG gemäß Anspruch 1, **dadurch gekennzeichnet, daß** $p$ einen Wert in dem Bereich von $0 \leq p \leq 1$ aufweist.

4. AWG-Vorrichtung nach einem der vorhergehenden Ansprüche, **dadurch gekennzeichnet, daß** die Länge ($L$) des verjüngten Wellenleiters zwischen dem entsprechenden Freiraumkoppler und einem ersten Ende mindestens eines der Eingangs- und Ausgangswellenleiter, der mit dem verjüngten Wellenleiter verbunden ist, so gewählt ist, daß die Phasendifferenz $\Delta\varphi$ zwischen der fundamentalen und der Mode zweiter Ordnung in dem entsprechenden Freiraumkoppler ungefähr gleich $Nx\pi$ ist, wobei $N$ eine ganze Zahl ist.

5. AWG-Vorrichtung nach einem der vorhergehenden Ansprüche, **dadurch gekennzeichnet, daß** das Mittel (30) zum Abflachen des Durchlaßbandes zwischen dem ersten Freiraumkoppler und dem mindestens einen Eingangswellenleiter angeordnet ist.

6. AWG nach Anspruch 5, **dadurch gekennzeichnet, daß** eine Mehrzahl von Eingangswellenleitern vorgesehen ist und ein im wesentlichen identisches Mittel (30) zum Abflachen des Durchlaßbandes für jeden Eingangswellenleiter vorgesehen ist.

7. AWG-Vorrichtung nach Anspruch 6, **dadurch gekennzeichnet, daß** eine adiabatische Verjüngung an dem Ende jedes Ausgangswellenleiters, das optisch mit dem zweiten Freiraumkoppler verbunden ist, vorgesehen ist, so daß sich der Ausgangswellenleiter hin zu dem zweiten Freiraumkoppler aufweitet.

8. AWG-Vorrichtung nach Anspruch 5, **dadurch gekennzeichnet, daß** das Mittel (30) zum Abflachen des Durchlaßbandes auch zwischen dem zweiten Freiraumkoppler (4) und mindestens einem Ausgangswellenleiter (10) angeordnet ist.

9. AWG-Vorrichtung nach einem der Ansprüche 1 bis 4, **dadurch gekennzeichnet, daß** ein im wesentlichen identisches Mittel (30) zum Abflachen des Durchlaßbandes zwischen dem zweiten Freiraumkoppler (30) und jedem der Ausgangswellenleiter (10) angeordnet ist.

10. AWG-Vorrichtung nach Anspruch 9, **dadurch gekennzeichnet, daß** eine adiabatische Verjüngung an dem Ende jedes Eingangswellenleiters, das optisch mit dem ersten Freiraumkoppler (3) verbunden ist, vorgesehen ist, so daß sich der Eingangswellenleiter zu dem ersten Freiraumkoppler (3) hin aufweitet.

**Revendications**

1. Dispositif à réseau de guides d'ondes alignés (AWG) comportant :

au moins un guide d'onde d'entrée (21, 22) à mode sensiblement unique couplé optiquement à un premier coupleur à espace libre ;
une pluralité de guides d'ondes alignés (8) couplés optiquement entre le premier coupleur (3) à espace libre et un second coupleur (4) à espace libre, la pluralité de guides d'ondes alignés (8) ayant entre eux des différences prédéterminées de longueurs de chemin optique ;
une pluralité de guides d'ondes de sortie (10) à mode sensiblement unique couplés optiquement au second coupleur à bloc ;
un moyen (30) d'aplatissement de bande passante disposé entre au moins l'un des guides d'ondes d'entrée et de sortie à mode sensiblement unique et à l'un, adjacent, des premier et second coupleurs à espace libre, le moyen (30) d'aplatissement de bande passante comportant un guide d'onde effilé non adiabatique qui augmente de largeur vers le coupleur à espace libre respectif;
au moins une partie initiale du guide d'onde effilé non adiabatique, laquelle partie initiale est connectée audit un des guides d'ondes d'entrée et de sortie à mode sensiblement unique ayant un angle d'effilement qui augmente vers ledit coupleur à espace libre respectif, et le guide d'onde effilé non adiabatique fusionne de façon sensiblement continue avec ledit un des guides d'ondes d'entrée et de sortie à mode sensiblement unique ; dans lequel le guide d'onde effilé a une forme curviligne définie par les équations suivantes :

$$w(t) = w_{in} + \frac{w_{out} - w_{in}}{2}\left[1 - \cos(\pi t)\right]$$

$$z(t) = L\left[t + \frac{P}{2\pi}\sin(2\pi t)\right]$$

$$t = [0 \ ... \ 1]$$

où L est la longueur du guide d'onde effilé ;
w(t) est la largeur suivant la direction de propagation;
z(t) est la longueur suivant la direction de propagation;
$w_{in}$ et $w_{out}$ sont les largeurs des extrémités d'entrée et de sortie respectivement du guide d'onde effilé;
et p est un facteur de forme, qui a une valeur comprise entre 0 et 1.

2. Dispositif AWG selon la revendication 1, dans lequel le guide d'onde effilé non adiabatique est effilé graduellement de façon à exciter graduellement le mode de second ordre.

3. AWG selon la revendication 1, dans lequel p a une valeur dans la plage de $0 \leq p \leq 1$.

4. Dispositif AWG selon l'une quelconque des revendications précédentes, dans lequel la longueur (L) du guide d'onde effilé, entre ledit coupleur à espace libre et une première extrémité dudit, au moins un, des guides d'ondes d'entrée et de sortie, respectifs, qui est connecté au guide d'onde effilé, est choisie de façon que la différence de phase $\Delta\varphi$ entre le mode fondamental et le mode de second ordre, au coupleur à espace libre respectif, soit approximativement égale à N x $\pi$, où N est un entier.

5. Dispositif AWG selon l'une quelconque des revendications précédentes, dans lequel ledit moyen (30) d'aplatissement de la bande passante est disposé entre le premier coupleur à espace libre et ledit, au moins un, guide d'onde d'entrée.

6. AWG selon la revendication 5, dans lequel une pluralité de guides d'ondes d'entrée sont prévus et un moyen (30) d'aplatissement de la bande passante sensiblement identique est prévu pour chaque guide d'onde d'entrée.

7. Dispositif AWG selon la revendication 6, dans lequel un effilement adiabatique est prévu à l'extrémité de chaque guide d'onde de sortie couplée optiquement au second coupleur à espace libre, de façon que le guide d'onde de sortie s'élargisse vers le second coupleur à espace libre.

8. Dispositif AWG selon la revendication 5, dans lequel le moyen (30) d'aplatissement de bande passante est également disposé entre le second coupleur (4) à espace libre et au moins un guide d'onde de sortie (10).

9. Dispositif AWG selon l'une quelconque des revendications 1 à 4, dans lequel un moyen (30) d'aplatissement de la bande passante sensiblement identique est disposé entre le second coupleur (30) à espace libre et chaque guide d'onde de sortie (10).

10. Dispositif AWG selon la revendication 9, dans lequel un effilement adiabatique est prévu à l'extrémité de chaque guide d'onde d'entrée couplée optiquement au premier coupleur à espace libre (3), de façon que le guide d'onde d'entrée s'élargisse vers le premier coupleur (3) à espace libre.

FIG. 1

FIG. 2(a)

FIG. 2(b)

## FIG. 3

## FIG. 4

FIG. 5(a)

FIG. 5(b)

Input focal plane

Output focal plane

Taper | Phase shifter

$d_{in}$

Win

WaddStr

Wtap,in

Lin | L1 | L2

Wtap,out | Wout

$d_{out}$

Ltap,out

## FIG. 6

Insertion Loss (dB)

PBF1$_A$

G$_A$

Relative Wavelength (nm)

## FIG. 7

FIG.   8

FIG.   9(a)

FIG.   9(b)

FIG.   9(c)

FIG. 10

FIG. 11

FIG. 12

EP 1 430 342 B1